# EUROPÄISCHE PATENTSCHRIFT

(11) **EP 2 042 750 B1**
(45) Veröffentlichungstag und Bekanntmachung des Hinweises auf die Patenterteilung: **26.06.2013**
(21) Anmeldenummer: 08014310.0
(22) Anmeldetag: 11.08.2008
(51) Int. Cl.: F16B 19/08

(54) **Verfahren zum Anbringen eines Funktionselementes an ein Blechteil sowie Zusammenbauteil**
Method for installing a function element onto a piece of sheet metal and assembly
Procédé d'application d'un élément de fonction sur une pièce en tôle et composant d'ensemble

(30) Priorität: 28.09.2007 DE 102007046521
(43) Veröffentlichungstag der Anmeldung: 01.04.2009
(73) Patentinhaber: Profil Verbindungstechnik GmbH & Co. KG, 61381 Friedrichsdorf (DE)
(72) Erfinder: Babej, Jiri, 35423 Lich (DE)
(74) Vertreter: Manitz, Finsterwald & Partner GbR

(56) Entgegenhaltungen:
- US-A- 3 405 436
- US-A- 4 724 610

## Beschreibung

Die vorliegende Erfindung betrifft ein Verfahren zur Anbringung eines Funktionselements an ein Blechteil, wobei das Funktionselement einen Kopfteil mit einer Blechauflagefläche sowie einen von der Blechanlagefläche wegragenden Einstanz- bzw. Einpressabschnitt aufweist und sich nach der Anbringung an das Blechteil in einer Sicke des Blechteils befindet, so dass das freie Ende des Einpressabschnitts vorzugsweise nicht über die sich außerhalb der Sicke befindlichen und dem Kopfteil abgewandten Seite des Blechteils hinausragt, wobei mittels einer Matrize Blechmaterial mindestens auf zwei einander gegenüberliegenden Seiten des Einpressabschnitts dadurch verstemmt wird, das es in benachbarten Hinterschneidungen des Einpressabschnitts eingeformt wird.

Ein Verfahren dieser Art ist an sich bekannt, beispielsweise zur Anbringung der so genannten UM-Einpressmutter der Fa. Profil Verbindungstechnik GmbH & Co. KG an ein Blechteil. Bei diesem bekannten Verfahren wird in einem ersten Schritt in einem ersten Werkzeug das Blechteil durch Einpressung der Sicke in das Blechteil für die Aufnahme der rechteckigen Einpressmutter vorbereitet, wobei die Sicke üblicherweise in Draufsicht eine kreisrunde Form aufweist mit einer planaren Bodenfläche, die über eine schräg gestellte umlaufende Wand in das umliegende Blechteil übergeht. Nach Anfertigung der Sicke wird dann die Einpressmutter in einem zweiten Schritt in einem zweiten Werkzeug an das Blechteil angebracht, dadurch, dass der Einpressabschnitt von der erhabenen Seite der Sicke kommend selbststanzend durch das Blechteil hindurch gedrückt wird, das auf einer entsprechenden Matrize im Bereich der Sicke abgestützt wird. Diese Matrize staucht das Blechteil auf zwei gegenüberliegenden Seiten des Einpressabschnitts so, dass Blechmaterial in den entsprechenden Hinterschneidungen des Einpressabschnitts benachbart zur Blechaufnahmefläche einpresst wird, wodurch das Element auspresssicher im Blechteil gehalten wird.

Die Sicke weist eine axiale Tiefe entsprechend der axialen Länge des Einpressabschnitts auf, so dass sich die Blechauflagefläche des Kopfteils des Funktionselements an der planaren erhobenen Seite der Sicke befindet und der Einpressabschnitt durch das Stanzloch hindurch und in die Vertiefung der Sicke des Blechteils hinein erstreckt, jedoch nicht über die dem Kopfteil abgewandten Seite des umliegenden Blechteils hinausragt, sondern vorzugsweise mit dieser in etwa bündig liegt oder gegenüber dieser Seite leicht zurückversetzt ist. Das bedeutet, dass, wenn ein zweites Bauteil an dem Blechteil durch eine Schraube befestigt wird, die durch das weitere Bauteil in das Gewinde der Einpressmutter eingeschraubt wird, das zweite Bauteil flächenbündig mit dem ersten Blechteil liegt. Das freie Ende des Einpressabschnitts liegt wenigstens beim Anziehen der Schraube an dem zweiten Bauteil an, wodurch eine hochwertige Schraubverbindung entsteht.

Solche rechteckigen Muttern werden aus mehreren Gründen gerne verwendet, beispielsweise weil sie nicht sehr hoch bauen, d.h. in der Gesamthöhe relativ niedrig sind und weil sie preisgünstig herstellbar und daher in der Anschaffung kostengünstiger sind.

Problematisch bei der bisherigen Vorgehensweise, bei der das Element in einer Sicke angebracht ist, ist der Aufwand, der mit der Herstellung der Sicke einhergeht.

US 3,405,436 A lehrt eine Vorrichtung zum Anbringen einer rechteckigen Mutter in ein vorgestanztes Blechteil.

US 4,724,610 A offenbart eine Vorrichtung zum Anbringen einer rechteckigen Mutter in ein vorgeformtes Blechteil.

Aufgabe der vorliegenden Erfindung ist es daher, ein Verfahren der eingangs genannten Art so zu gestalten, dass der Aufwand für die Herstellung der Sicke gegenüber dem bisherigen Verfahren deutlich herabgesetzt wird.

Zur Lösung dieser Aufgabe wird ein Verfahren gemäß Anspruch 1 vorgeschlagen. Dieses Verfahren ist dadurch gekennzeichnet dass die Sicke in einem Setzkopf vor der Durchstanzung des Blechteils durch das Funktionselement angefertigt bzw. fertig gestellt wird und dass die Einstanzung des Funktionselements in das Blechteil im gleichen Hub einer Einpresseinrichtung erfolgt, in dem die Sicke ausgebildet wird.

Besonders bevorzugt ist es, wenn die Sicke vor der Durchstanzung des Blechteils durch das Funktionselement angefertigt bzw. fertig gestellt wird.

Der Vorteil der Erfindung ist daher darin zu sehen, dass anstatt zwei verschiedene Werkzeuge zur Herstellung der Sicke und zur Anbringung des Funktionselements an das Blechteil im Bereich der Sicke verwenden zu müssen, wobei diese zwei verschiedenen Werkzeuge entweder in getrennten Presseinrichtungen oder in zwei einander folgenden Stufen eines Folgeverbundwerkzeugs vorgesehen waren, erfindungsgemäß die Sicke in das Blechteil eingeformt wird und im gleichen Hub der Einpresseinrichtung bzw. der Einstanzeinrichtung das Funktionselement, d.h. die Einpressmutter, in das Blechteil, d. h in die Sicke eingestanzt wird. Dies führt nicht nur dazu, dass die Ausbildung der Sicke und die Anbringung des Elements in einer Operation durchgeführt werden, sondern dass der Aufwand für die Werkzeuge insgesamt herabgesetzt wird. Zwar müssen die Werkzeuge für die Ausbildung der Sicke und für die Anbringung des Funktionselements an das Blechteil eventuell eine etwas kompliziertere Form aufweisen als wenn sie nur die jeweils eine Funktion ausüben müssten, insgesamt sind die Werkzeugkosten aber deutlich geringer, da man mit einem Werkzeugsatz anstatt mit zwei Werkzeugsätzen zu tun hat.

Besonders bevorzugte Ausführungsformen des erfindungsgemäßen Verfahrens bzw. des durch das Verfahren entstehende Zusammenbauteil sind den Unteransprüchen zu entnehmen.

Die Erfindung wird nachfolgend anhand der Zeichnungen näher erläutert, in diesen zeigen:

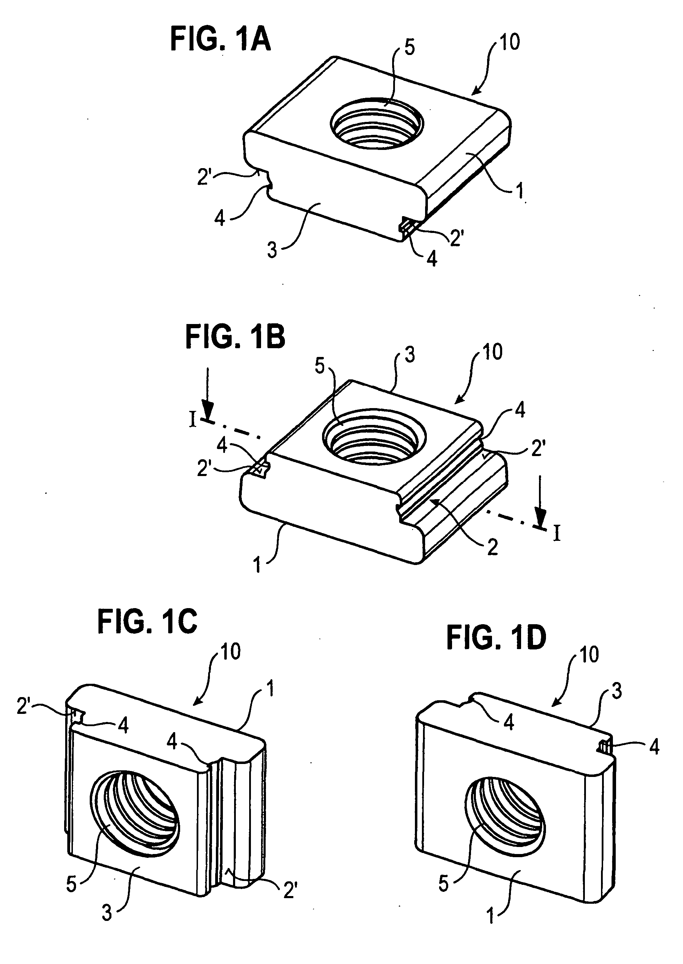

- Fig. 1A-D: vier perspektivische Darstellungen eines an sich bekannten rechteckigen selbststanzenden Funktionselements in Form einer so genannten UM-Einpressmutter erhältlich von der Firma Profil-Verbindungstechnik GmbH & Co. KG, wobei die Fig. 1A eine Darstellung von oben und von der linken Seite auf der Oberseite des Kopfteils des Funktionselementes, die Fig. 1B eine Darstellung von unten und von der rechten Seite auf der Unterseite des Kopfteils des Funktionselements, die Fig. 1C eine Darstellung von unten und auf der linken Schmalseite des Funktionselements und die Fig. 1D eine Darstellung von oben und auf der rechten Schmalseite des Funktionselements zeigt,
- Fig. 2: die Ausgangsposition bei der Anbringung einer Einpressmutter gemäß den Fig. 1A-D an ein Blechteil unter Anwendung eines teilweise in axialer Ebene geschnittenen Setzkopfs und einer in Seitenansicht und axialer Halbschnittgezeigten Matrize, der bzw. die ausgelegt sind, um das erfindungsgemäße Verfahren durchzuführen,
- Fig. 3: die Vorrichtung gemäß Fig. 2 zu einem Zeitpunkt, wenn das Blechteil gerade zwischen der Matrize und dem Setzkopf am Anfang des Vorgangs zur Ausbildung der Sicke geklemmt ist,
- Fig. 4: eine Darstellung ähnlich der Fig. 3, jedoch in einem ersten Stadium der Ausbildung der Sicke,
- Fig. 5: wiederum die gleiche Vorrichtung wie Fig. 4, jedoch am Ende des Vorgangs zur Ausbildung der Sicke,
- Fig. 6: die gleiche Vorrichtung wie in den Fig. 2 bis 5, jedoch in einem weiteren Stadium, in dem der Stempel des Setzkopfs sich gegenüber dem Nasenstück des Setzkopfes bewegt hat und die Einpressmutter in Berührung mit der oberen Fläche der Sicke gebracht hat,
- Fig. 7: die Lage nach einer weiteren Bewegung des Stempels gegenüber dem Nasenstück, wobei die Einpressmutter das Blechteil zur Hälfte durchgestanzt hat,
- Fig. 8: die gleiche Vorrichtung wie in Fig. 2, jedoch nach einer weiteren Bewegung des Stempels gegenüber dem Nasenstück des Setzkopfs, wobei der Einstanzabschnitt der Einpressmutter das Blechteil gerade durchgestanzt hat und
- Fig. 9: die gleiche Vorrichtung wie die bisherigen Figuren 2 bis 8, jedoch hier nach der fertigen Einstanzung des Einpresselements in das Blechteil.

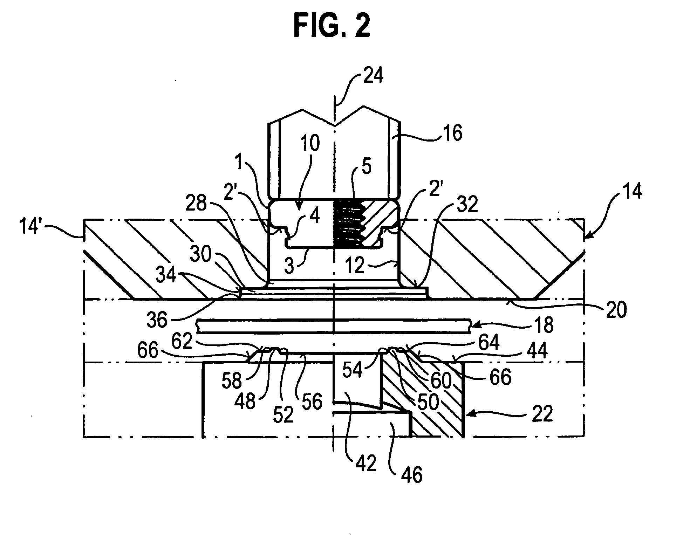

Bezug nehmend auf die Fig. 1A bis 1D und 2 wird mit 10 ein Funktionselement in Form einer rechteckigen UM-Einpressmutter gezeigt. Das Funktionselement 10 weist einen Kopfteil 1 mit zwei länglichen Flächenbereichen 2', die gemeinsam die Blechauflagefläche 2 bilden (d.h. die gesamte Blechauflagefläche 2 ist durch die zwei streifenartigen Teilflächen 2' gebildet) sowie einen von der Blechanlagefläche wegragenden Einstanz- bzw. Einpressabschnitt 3 auf. Wie aus den Fig. 1A bis 1D ersichtlich handelt es sich bei dem Funktionselement 10 um ein in Draufsicht rechteckiges oder quadratisches Element mit einem in Stirnansicht ebenfalls rechteckigen (hier quadratischen) Stanzabschnitt 3, der von der Seite der Blechauflagefläche 2 des Kopfteils 1 von diesem wegragt und auf zwei entgegengesetzten Seiten Hinterschneidungen 4 aufweist, in die Blechmaterial durch entsprechende Nasen einer später zu beschreibenden Matrize eingedrückt wird, um ein Auspressen des in das Blechteil eingestanzten Funktionselements aus dem Blechteil heraus zu verhindern. Die Einpressmutter kann in an sich bekannter Weise kostengünstig aus einem entsprechenden länglichen Profil hergestellt werden, d.h. ein Profil mit einem Querschnitt entsprechend der Schnittebene I-I in Fig. 1B. Die Einpressmutter 10 ist hier bereits mit einem mittleren Gewinde 5 versehen. Dies ist nicht zwingend erforderlich statt mit einem Gewinde könnte das Funktionselement mit einer glatten Zylinderbohrung zur Aufnahme einer Welle oder eines Stifts oder einer eine Gewinde schneidenden oder formenden Schraube versehen werden.

Gemäß Fig. 2 befindet sich das Funktionselement 10 in Form einer Einpressmutter in einem Stempelkanal 12 eines Setzkopfes 14, und es kann mit einem Stempel 16 nach unten durch den Stempelkanal 12 gedrückt werden. Der Stempelkanal 12 hat die gleiche Querschnittsform wie das Kopfteil 1 der rechteckigen Einpresssmutter, ist aber so bemessen, dass die Einpressmutter ohne weiteres mittels des Stempels durch den Stempelkanal 12 hindurchgedrückt werden kann. In an sich bekannter Weise können Elemente wie Kunststofffedern (nicht gezeigt) im Stempelkanal 12 vorgesehen werden, die auf die Einpressmutter 10 eine diese zurückhaltende Kraft ausüben, die erst vom Stempel überwunden werden muss, um die Einpressmutter 10 durch den Stempelkanal 12 hindurch zu bewegen. Dadurch wird sichergestellt, dass die Einpressmutter 10 in Berührung mit dem Stempel bleibt und nicht im freien Fall durch den Stempelkanal hindurch fällt. Da solche Setzköpfe im Stand der Technik bekannt sind, beispielsweise aus der EP 0755749 B2, werden sie hier nicht weiter beschrieben.

Es genügt zu sagen, dass die Einpressmutter üblicherweise durch einen Schlauch oder eine entsprechende Führung zu dem Setzkopf geführt wird und seitlich zwischen Haltelementen eingeschoben wird, die das Element halten, bis sie vom Stempel 16 in den Stempelkanal 12 bzw. durch den Stempelkanal hindurch weiter nach unten befördert werden.

Beispielsweise könnte die Einpressmutter in der Ausgangsposition in Fig. 2 auf zwei federvorgespannten Kugeln sitzen (nicht gezeigt), die in der Seitenwand des Stempelkanals 12 eingelassen sind, teilweise in den Stempelkanal hineinragen und unmittelbar unterhalb der Blechauflagebereiche 2' die Einpressmutter abstützen. Durch eine nach unten gerichtete Bewegung des Stempels 16 können die Kugeln aufgrund der auf die Einpressmutter 10 vom Stempel ausgeübten Kraft zurückgedrängt werden und so vom Stempel 16 durch den Stempelkanal bewegt werden.

Mit dem Bezugszeichen 18 wird ein Blechteil schematisch dargestellt, das sich zwischen dem freien unteren Ende des Setzkopfes 14 und einer darunter angeordneten Matrize 22 befindet. Die Matrize 22 und der Setzkopf 14 sind koaxial zueinander und zu der mittleren Längsachse 24 der Einpressmutter 10 angeordnet.

Üblicherweise wird der Setzkopf an einem oberen Werkzeug einer Presse oder an einer Zwischenplatte einer Presse befestigt, während sich die Matrize entweder in der Zwischenplatte der Presse bzw. im unteren Werkzeug der Presse befindet. Es können aber auch umgekehrte Anordnungen verwendet werden, bei denen der Setzkopf an der Zwischenplatte der Matrize oder am unteren Werkzeug der Presse befestigt ist und die Matrize dann am oberen Werkzeug der Presse bzw. an der Zwischenplatte angeordnet wird. Auch ist es nicht zwingend erforderlich, dass der Stempelkanal 12 mit Längsachse 24 in senkrechter Richtung angeordnet ist. Durch die Verwendung von Schiebern können auch schräg gestellte Varianten verwendet werden, wenn es darum geht, ein Befestigungselement an einem schräg gestellten Bereich eines Blechteils anzubringen.

Ferner ist es nicht zwingend erforderlich, eine Presse zur Anbringung der Einpressmutter an dem Blechteil zu verwenden, sondern es können beispielsweise Roboter zur Anwendung gelangen, die für den entsprechenden Hub des Setzkopfes gegenüber der Matrize sorgen oder es kann eine Art C-Gestell verwendet werden, wobei die Verwendung von C-Gestellen und Robotern im Stand der Technik an sich bestens bekannt ist und daher hier nicht weiter beschrieben werden muss.

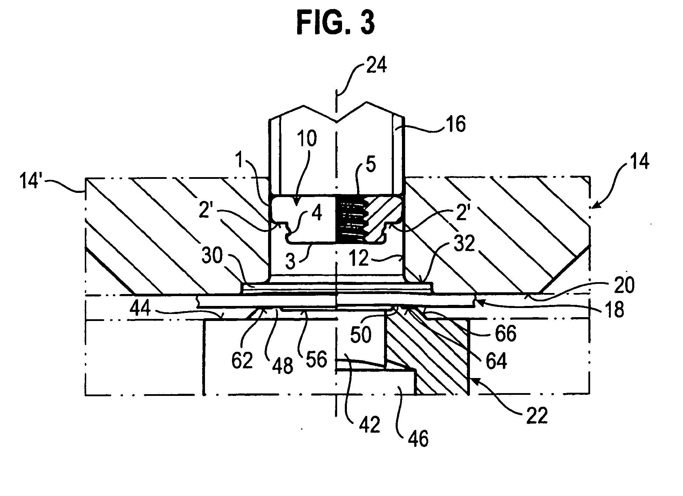

Fig. 3 zeigt dann die Vorrichtung nachdem der Setzkopf so weit nach unten gedrückt ist, dass das Blechteil auf der Einstanzmatrize sitzt. Der Stempel 16 bewegt sich in diesem Stadium mit dem vorderen Teil 14' des Setzkopfes, wobei der Teil 14' als Nasenstück oder als untere Platte des Setzkopfes bezeichnet werden kann. Im Regelfall ist der Stempel 16 fest an der Zwischenplatte einer Presse oder am oberen Werkzeug der Presse (oder an einem entsprechenden Teil der verwendeten Einpresseinrichtung (nicht gezeigt)) befestigt, während der untere Teil des Setzkopfes 14, d.h. das Nasenstück, das mit dem Bezugszeichen 14' versehen ist, gegenüber der Zwischenplatte bzw. dem oberen Werkzeug der Platte (bzw. dem genannten Teil) durch eine Feder nach unten (in Bezug auf die hier dargestellte Ausrichtung der Vorrichtung) vorgespannt wird.

In dieser Ausführungsform ist die Stärke der Feder so ausgelegt, dass sie ausreicht, um die erwünschte Sicke auszubilden, wie nachfolgend näher erläutert wird.

Dies bedeutet, dass mit zunehmendem Schließen der Presse das Nasenstück 14' zunächst nicht gegenüber dem Stempel 16 zunehmend zurück weicht, sondern sich mit diesem und der Einpressmutter 10 in der Ausgangsposition gemeinsam nach unten bewegt. Dies bedeutet ferner, dass das Nasenstück 14' als Niederhalter funktioniert und in Fig. 3 bereits das Blechteil zwischen sich und die erhabenen Nasen 48, 50 der Matrize 22 geklemmt hat.

Wie auch gut in Fig.2 zu sehen ist, hat das freie Stirnende 20 des Setkopfes 14 bzw. dessen Nasenstück 14' zwei koaxial angeordnete vertiefte Bereiche 28 und 30, wobei der obere Bereich 28 im Wesentlichen nur durch einen Radius an den Seiten des im Querschnitt rechteckigen Stempelkanals 12 gebildet ist. Der Radius ist deutlich kleiner als die Höhe des Kopfteils der Einpressmutter zwischen der Blechauflagefläche 2 und dem in der Zeichnung oberen Stirnende des Kopfteils 1. Dieser Bereich 28 bildet einen gewissen Freiraum, der im Stande ist, Blechmaterial aufzunehmen, falls ungünstige Toleranzen vorkommen, die es nötig machen, Blechmaterial unterzubringen, ohne eine fehlerhafte Verbindung zwischen der Einpressmutter und dem Blechteil zu erzeugen. Der Bereich 28 geht über eine sich senkrecht zur Längsachse 24 erstreckende Schulter 32 in den unteren Bereich 30 über, wobei diese Schulter 32 die Bodenfläche des Bereichs 30 bildet. Dieser vertiefte Bereich 30 ist in Draufsicht kreisrund und seine Umfangswandung 34 geht über einen möglichst sanften Radius 36 in die ebene Stirnseite 20 des Setzkopfs über. Die axiale Tiefe dieses unteren vertieften Bereichs 30 des Setzkopfs 14 entspricht der axialen Höhe der Sicke und in etwa der axialen Höhe des Einpressabschnitts 3 der Einpressmutter 10 zwischen der Blechauflagefläche 2 und der unteren Stirnseite des Einstanzabschnitts 3 abzüglich die Blechdicke und ist vorzugsweise geringfügig größer als diese um etwa 0,2 mm.

Die Matrize 22, auf der das Blechteil 18 abgestützt ist, hat eine mittlere Passage 42, deren Querschnittsform der Querschnittsform des Einpressabschnitts 3 der Einpressmutter 10 entspricht und die im Bereich der Stirnseite 44 der Matrize 22 geringfügig größer ist als die Abmessungen des Einpressabschnitts 3. Unterhalb dieses Bereichs kann sich die mittlere Passage 42 der Matrize etwas erweitern bzw. sie geht in eine erweiterte Passage 46 mit kreisförmigem Querschnitt über, so dass ein durch die Zusammenarbeit des Einpressabschnitts 3 und der Matrize 22 erzeugter Stanzbutzen leicht durch diese mittlere Passage entfernt werden bzw. hindurch fallen kann.

Auf der linken und rechten Seite der mittleren Passage 42 der Matrize 22, die mit der mittleren Längsachse des Stempels bzw. der mittleren Längsachse der Einpressmutter 10 ausgerichtet ist, befinden sich zwei Nasen 48, 50, die senkrecht zur Ebene der Zeichnung stehen und sich über eine Länge erstrecken, die der entsprechenden seitlichen Länge des Einpressabschnitts 3 der Einpressmutter senkrecht zur Zeichnungsebene, d.h. der Länge der Hinterschneidungen 4 entspricht. Diese Nasen 48, 50 gehen auf der axial inneren Seite über jeweilige schräg gestellte Flächen 52, 54 in eine stirnseitige Vertiefung 56 der Matrize 22 über. Die Bodenfläche dieser in Draufsicht rechteckigen Vertiefung, in die die mittlere Passage 42 mündet, steht senkrecht zur Längsachse 24. Auf der radial äußeren Seite der Nasen 48, 50 gehen diese über schräg gestellte Flanken 58, 60 in Flächen 62, 64 über, die senkrecht zur mittleren Längsachse der Anordnung stehen und etwas unterhalb der Oberseiten der Nasen 48, 50 angeordnet sind. Diese Flächen 62, 64 gehen wiederum über eine schräge umlaufende Seitenfläche 66, die in Draufsicht kreisrund ist, in eine weitere Ebene über, die mit dem Bezugszeichen 44 versehen ist und senkrecht zur mittleren Längsachse der Anordnung steht. Die Fläche mit dem Bezugszeichen 44 ist in Draufsicht ebenfalls kreisrund.

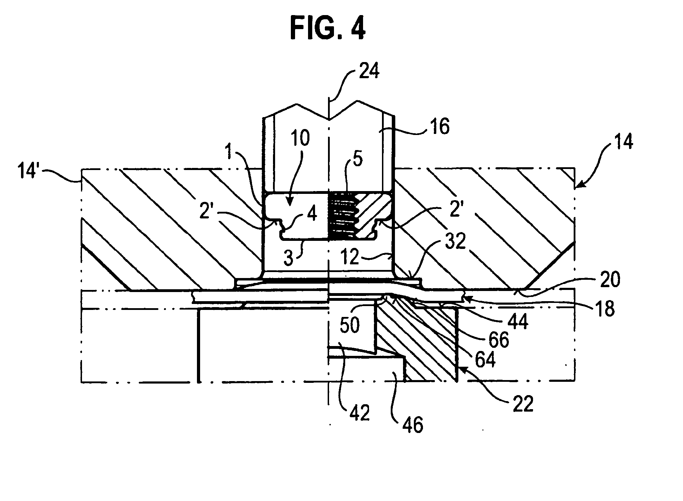

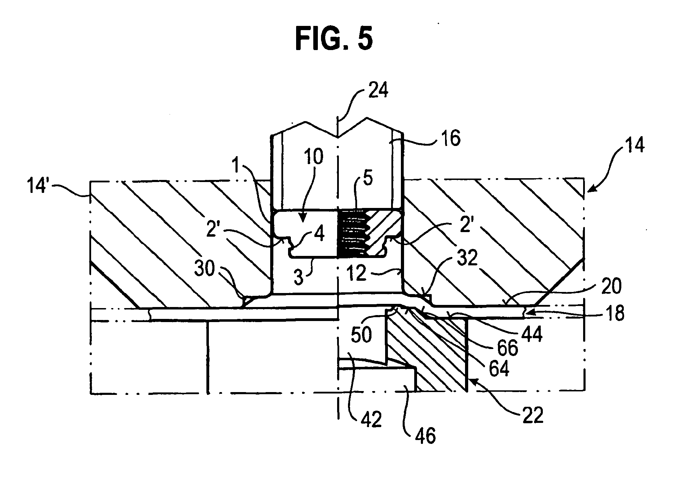

Im weiteren Stadium des Einstanzvorgangs gemäß Fig. 4, das nach weiterem Schließen der Presse sich das Nasenstück 14' erreich wird, haben der Stempel 16 und die Einpressmutter sich gemeinsam im Vergleich zu Fig. 3 nach unten bewegt, so dass die Stirnseite 20 des Nasenstücks 14' das Blechteil, das auf den Nasen 48, 50 der Matrize abgestützt ist, in einem kreisförmigen Bereich radial weiter nach außen als die Nasen 48, 50 nach unten gebogen hat, so dass es gerade die umlaufende Kante zwischen den Flächen 62, 64 und der Schrägfläche 66 berührt. Wenn die Presse oder die Einpresseinrichtung weiter schließt, wird die Position gemäß Fig. 5 erreicht. In dieser Position behalten das Nasenstück 14', der Stempel 16 und die Einpressmutter 10 die gleiche relative Position wie in den Fig. 2, 3 und 4, jedoch ist das Blechteil 18 nunmehr zu der erwünschten Sicke 76 ausgebildet. Man merkt, dass der Bereich des Blechteils 18 unmittelbar radial außerhalb der umlaufenden schräg gestellten Fläche 66 der Matrize 22 nunmehr zwischen der Fläche 20 des Nasenstücks 14' und der Fläche 44 der Matrize festgeklemmt ist, während der mittlere Bereich der Sicke 76 auf den Nasen 48, 50 sitzt.

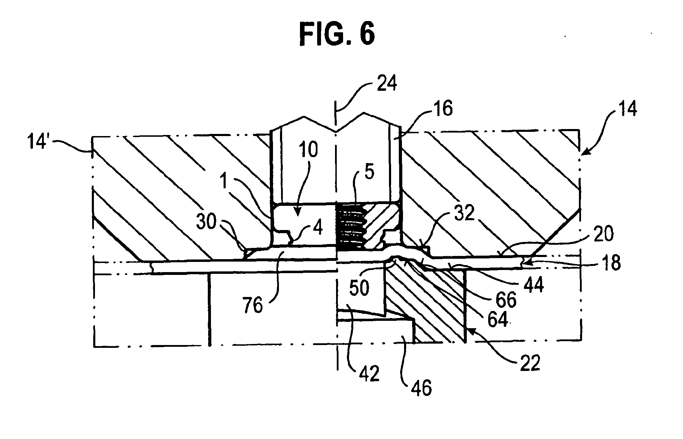

Da das Nasenstück 14' über dem Blechteil 18 an der Matrize sitzt, ist es nunmehr gegen eine weitere nach unten gerichtete Bewegung blockiert und die Widerstandskraft gegen eine solche weitere Bewegung steigt abrupt an. Diese Widerstandskraft überwindet nunmehr die Kraft der Feder, die das Nasenstück 14' nach unten verspannen. Dies bedeutet, dass das Nasenstück nunmehr gegenüber dem Rest des Setzkopfs 14 und dem Stempel 16 zurückweichen kann, d.h. dass der Stempel gegenüber dem Nasenstück beim weiteren Schließen der Presse bzw. der Einpresseinrichtung sich nach unten bewegen kann und nunmehr die Einpressmutter 10 (nach Überwindung der eher geringen Haltekraft der federvorgespannten Haltekugeln) in Richtung auf das Blechteil 18 zu bewegen kann, so dass diese gemäß Fig. 6 mit seinem Einstanzabschnitt 3 anfängt, die Sicke des Blechteils im Bereich der Vertiefung 56 zwischen den Nasen 48, 50 einzudrücken.

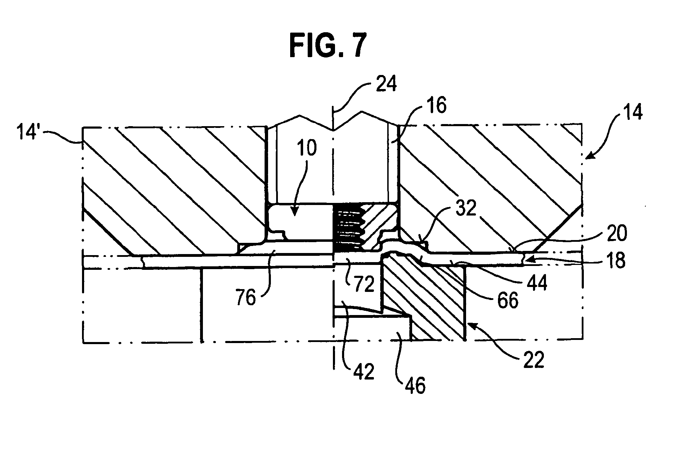

Zu einem späteren Zeitpunkt der Schließbewegung der Presse bzw. der Einpresseinrichtung hat der Einstanzabschnitt 3 der Einpressmutter unter der vom Stempel 16 ausgeübten Kraft angefangen, einen Stanzbutzen 72 aus dem Blechteil auszustanzen, wie in Fig. 7 gezeigt ist. D.h. das freie Ende 70 des Einpressabschnitts 3 ist nunmehr im Wesentlichen durch die gesamte Blechdicke des Blechteils 18 hindurchgepresst worden ist, was durch weiteres Schließen der Presse und durch die entsprechende nach unten berichtete Bewegung des Stempels 16 mit der Einpressmutter 10 gegenüber der Position gemäß Fig. 6 erreicht ist.

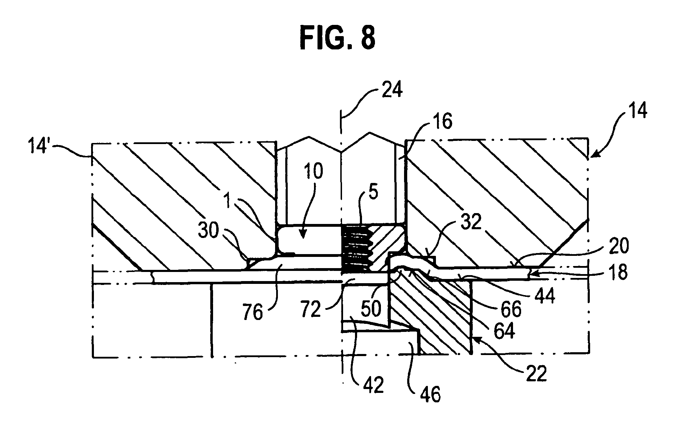

Bei noch weiterem Schließen der Presse und entsprechend nach unter erfolgter Bewegung des Setzkopfes 14 und des Stempels 16 wird dann das Stadium gemäß Fig. 8 erreicht, bei dem der Stanzbutzen 72, der eine Draufsichtsform entsprechend der rechteckigen bzw. quadratischen Draufsichtsform des Einpressabschnitts 3 der Einpressmutter 10 aufweist, gerade vom Blechteil 18 getrennt ist und dieses unter der Einwirkung der Nasen 48, 50 sowie der Flächen 62, 64 bzw. der Kanten der Flächen 62, 64 mit den Seitenflächen 66, 68 teilweise in den vertieften Bereich 30 des Setzkopfes 14 hineingedrückt und gleichzeitig radial innerhalb der Nasen 48, 50 nach unten gebogen ist, und zwar aufgrund der Kräfte, die vom Stempel 16 auf die Einpressmutter 10 und von dieser auf das Blechteil 18 ausgeübt werden.

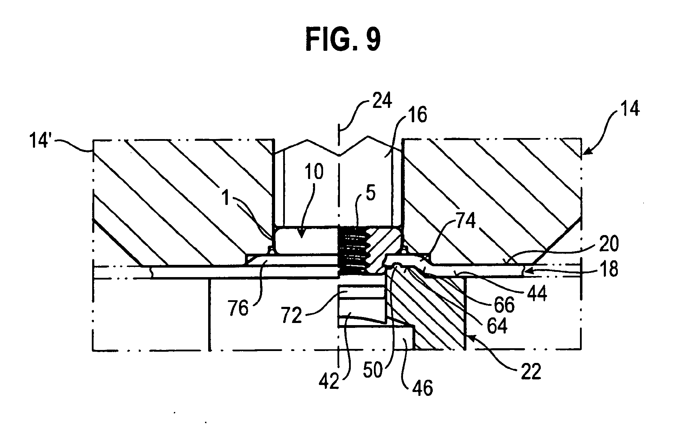

Schließlich schließt die Presse noch weiter, so dass der Setzkopf 14 mit dem Stempel 16 gegenüber der Matrize 22 die Position annimmt, die in Fig. 9 gezeigt ist.

Man merkt jetzt, dass die Nasen 48, 50 vollständig in das Blechmaterial hineingedrückt worden sind, wodurch dieses in die Hinterschneidungen 4 links und rechts des Einpressabschnitts 3 der Einpressmutter hinein verformt ist, so dass die Einpressmutter auspresssicher am Blechteil 18 gehalten ist. Ferner sieht man, dass das Blechteil 18 zwischen den Nasen 48, 50 und den Streifenbereichen 2' der Blechauflagefläche 2 und zwischen den ebenen Flächen 62, 64 der Matrize und der Bodenfläche 32 des vertieften Bereichs 30 des Setzkopfs 14 und zwischen der Stirnseite 20 des Nasenstücks des Setzkopfes 14 und der Stirnseite 44 der Matrize 22 geklemmt ist und daher in seine endgültige Form gebracht ist. Die Blechauflagefläche 2 des Kopfteils 1 der Einpressmutter ist mit der Bodenfläche 32 des unteren vertieften Bereichs 30 in etwa flächenbündig. Die Sicke 76 weist eine planare Fläche auf, auf der der Kopfteil der Einpressmutter mit seiner Blechauflagefläche 2 sitzt. Die kreisförmige Umrandung der Sicke ist durch den umlaufenden, in Draufsicht kreisförmigen schräg gestellten Blechbereich 74 gebildet, der sich innerhalb der unteren Vertiefung 30 des Nasenstücks des Setzkopfes 14 zwischen der umlaufenden schrägen Seitenfläche 66 der Matrize und der umlaufenden Ecke, die zwischen der Bodenfläche 32 und der Umfangswand 34 mit dem Radius 36 ausgebildet ist, befindet.

Durch das Zusammenarbeiten der flachen Stirnseite 20 des Setzkopfes 14 mit der flachen Stirnseite 44 der Matrize ist das Blechteil radial außerhalb der Sicke flach gepresst, d.h. irgendwelche Verwerfungen des Blechteils, die sich durch die Einstanzung der Einpressmutter 10 in das Blechteil 18 ergeben haben, werden im geschlossenen Zustand der Presse ausnivelliert, so das das Blechteil radial außerhalb der Sicke einen ebenen Verlauf hat.

Man sieht auch aus Fig. 9 wie der Stanzbutzen durch die mittlere Passage 42, 46 der Matrize mittels Schwerkraft entsorgt werden kann.

Durch Öffnen der Presse kann nunmehr das Blechteil 18 mit der eingestanzten Einpressmutter 10, wie in Fig. 6 dargestellt, aus der Presse entfernt werden. Es kann eine neue Einpressmutter an einen neuen Blechteil durch Wiederholung des Verfahrens angebracht werden.

Der vertiefte Bereich 56 innerhalb der Nasen 48, 50 der Matrize bildet einen Ausdehnungsraum für Blechmaterial und kann mehr oder weniger gefüllt werden, je nach dem, welche Toleranzen sich bei dem Blechteil bzw. bei den Einpressmuttern ergeben.

Bei allen Ausführungsformen können als Beispiel für den Werkstoff der Einpressmutter alle Materialien genannt werden, die im Rahmen der Kaltverformung die Festigungswerte der Klasse 8 gemäß ISO-Standard oder höher erreichen, beispielsweise eine 35B2-Legierung gemäß der alten Norm DIN 1654 oder einem Werkstoff gemäß DIN EN 20898 Teil 2. Die so gebildeten Einpressmutter eignen sich u.a. für alle handelsüblichen Stahlwerkstoffe für ziehfähige Blechteile wie auch für Aluminium oder dessen Legierungen. Auch können Aluminiumlegierungen, insbesondere solche mit hoher Festigkeit, für das Profil bzw. die Einpressmutter benutzt werden, z.B. A1Mg5. Auch kommen Profile bzw. Funktionselemente aus höherfesten Magnesiumlegierungen wie beispielsweise AM50 in Frage.

## Patentansprüche

1. Verfahren zur Anbringung eines Funktionselements (10) an ein Blechteil (18) in einer Vorrichtung, wobei die Vorrichtung einen Setzkopf (14) und eine Matrize (22) umfasst, wobei das Funktionselement (10) einen Kopfteil (1) mit einer Blechauflagefläche (2) sowie einen von der Blechanlagefläche wegragenden Einstanz- bzw. Einpressabschnitt (3) aufweist, sich nach der Anbringung an das Blechteil (18) in einer Sicke (76) des Blechteils befindet, so dass das freie Ende des Einpress-abschnitts (3) nicht über die sich außerhalb der Sicke (76) befindlichen und dem Kopfteil abgewandten Seite des Blechteils (18) hinausragt, wobei mittels einer Matrize (22) Blechmaterial mindestens auf zwei einander gegenüberliegenden Seiten des Einpressabschnitts dadurch verstemmt wird, das es in benachbarten Hinterschneidungen (4) des Einpressabschnitts (3) eingeformt wird,
**dadurch gekennzeichnet,**
**dass** die Sicke (76) vor der Durchstanzung des Blechteils (18) durch das Funktionselement angefertigt bzw. fertig gestellt wird, dass der Setzkopf (14), der das Funktionselement (10) aufnimmt und in das Blechteil (18) einstanzt, im Bereich seiner dem Blechteil (18) zugewandten Stirnseite (20) eine Vertiefung (30) mit einer Gestalt entsprechend der Gestalt der Sicke (76) aufweist, beispielsweise eine kreisrunde Vertiefung, die eine axiale Tiefe entsprechend der gewünschten axialen Höhe der Sicke (76) aufweist, und dass das Blechteil (18) mittels der Matrize (22) zur Ausbildung der Sicke (76) in diese Vertiefung (80) eingeformt wird, und
**dass** die Einstanzung des Funktionselements (10) in das Blechteil im gleichen Hub einer Einpresseinrichtung erfolgt, in dem die Sicke (76) ausgebildet wird.

2. Verfahren nach Anspruch 1,
**dadurch gekennzeichnet,**
**dass** es sich bei dem Funktionselement (10) um ein in Draufsicht rechteckiges oder quadratisches Element handelt mit einem ebenfalls rechteckigen oder quadratischen Stanzabschnitt (3), der von der Seite der Blechauflagefläche (2) des Kopfteils (1) von diesem wegragt und auf diesen zwei entgegengesetzten Seiten Hinterschneidungen (4) aufweist, in die Blechmaterial durch entsprechende Nasen (48, 50) der Matrize (22) eingedrückt wird, um ein Auspressen des in das Blechteil (18) eingestanzten Funktionselements (10) aus dem Blechteil (18) heraus zu verhindern.

3. Verfahren nach Anspruch 1 oder 2,
**dadurch gekennzeichnet,**
**dass** der Setzkopf (14), der zum Einstanzen des Funktionselements (10) und zur Ausbildung der Sicke (76) verwendet wird, ein Nasenstück (14'), das über eine Feder an einem Presskraft übertragenden Teil der Einpresseinrichtung angeschlossen ist, sowie einen Stempel (16), der unmittelbar am genannten Teil angebracht ist, aufweist, wobei die Stärke der Feder so ausgelegt ist, dass sie ausreicht, um die Sicke (76) auszubilden und erst nach der Ausbildung der Sicke (76) aufgrund des Kraftanstiegs bei Fortsetzung des Hubes der Einpresseinrichtung das Zurückweichen des Nasenstücks (14') gegenüber dem Stempel (16) zulässt, das erforderlich ist, um das Funktionselement (10) mittels des Stempels und der Matrize im weiteren Verlauf des Hubs der Einpresseinrichtung in das Blechteil im Bereich der fertigen Sicke (76) einzustanzen.

## Claims

1. A method of attaching a functional element (10) to a sheet metal part (18) in an apparatus, wherein the apparatus includes a setting head (14) and a die button (22), wherein the functional element (10) has a head part (1) having a sheet metal contact surface (2) as well as a punching section or pressing section (3) projecting away from the sheet metal contact surface and is located in a bead (76) of the sheet metal part after the attachment to the sheet metal part (18) so that the free end of the pressing section (3) does not project beyond the side of the sheet metal part (18) located outside the bead (76) and remote from the head part, wherein sheet metal material is caulked at at least two mutually oppositely disposed sides of the pressing section by means of the die button (22) in that said sheet metal material is moulded into adjacent undercuts (4) of the pressing section (3),
**characterised in that**
the bead (76) is fabricated or completed prior to the punching of the sheet metal part (18) by the functional element;
**in that** the setting head (14) which receives the functional element (10) and punches it into the sheet metal part (18) has a recess (30) in the region of its end face (20) facing the sheet metal part (18), said recess having a design corresponding to the design of the bead (76), for example a circular recess, which has an axial depth corresponding to the desired axial height of the bead (76); and **in that** the sheet metal part (18) is moulded into the recess (80) by means of the die button (22) for forming the bead (76); and
**in that** the punching of the functional element (10) into the sheet metal part (18) takes place in the same stroke of a pressing device in which the bead (76) is fabricated.

2. A method in accordance with claim 1,
**characterised in that**
the functional element (10) is an element which is rectangular or square in plan view and has a likewise rectangular or square punching section (3) which projects away from the head part (1) from the side of the sheet metal contact surface (2) of the head part (1) and has undercuts (4) on these two opposite sides into which the sheet metal material is pressed by corresponding noses (48, 50) of the die button (22) to prevent a pressing of the functional element (10), which is punched into the sheet metal part (18), out of the sheet metal part (18).

3. A method in accordance with claim 1 or claim 2,
**characterised in that**
the setting head (14), which is used for punching the functional element (10) and for forming the bead (76), has a nose piece (14') which is connected via a spring to a part of the pressing device transmitting a pressing force and has a plunger (16) which is directly attached to the said part, with the strength of the spring being configured to be sufficient in order to fabricate the bead (76) and only after the formation of the bead (76) to allow the nose piece (14') to escape back with respect to the plunger (16) on a continuation of the stroke of the pressing device due to the rise in pressure, which escape is necessary in order to punch the functional element (10) into the sheet metal part in the region of the completed bead (76) in the further course of the stroke of the pressing device by means of the plunger and the die button.

## Revendications

1. Procédé pour le montage d'un élément fonctionnel (10) sur une pièce en tôle (18) dans un dispositif, ledit dispositif comprenant une tête de pose (14) et une matrice (22), et l'élément fonctionnel (10) comprenant une partie de tête (1) avec une surface d'appui sur tôle (2) ainsi qu'un tronçon à poinçonner ou à enfoncer (3) en saillie en éloignement de la surface d'appui sur tôle, l'élément fonctionnel se trouvant, après le montage sur la pièce en tôle (18), dans une moulure (76) de la pièce en tôle, de sorte que l'extrémité libre du tronçon à enfoncer (3) ne dépasse pas au-delà du côté de la pièce en tôle (18) situé à l'extérieur de la moulure (76) et détourné de la partie de tête, dans lequel le matériau de la tôle est maté au moyen de la matrice (22) au moins sur deux côtés mutuellement opposés du tronçon à enfoncer du fait qu'il est amené à se déformer en pénétrant dans des contre-dépouilles voisines (4) du tronçon à enfoncer (3),
**caractérisé en ce que**
la moulure (76) est fabriquée ou a été finie avant le poinçonnage de la pièce en tôle (18) par l'élément fonctionnel,
**en ce que** la tête de pose (14), qui reçoit l'élément fonctionnel (10) et le poinçonne dans la pièce en tôle (18), comporte dans la région de sa face frontale (20) tournée vers la pièce en tôle (18), un renfoncement (30) avec une conformation correspondant à la conformation de la moulure (76), par exemple un renfoncement arrondi circulaire, qui présente une profondeur axiale correspondant à la hauteur axiale souhaitée pour la moulure (76),
**en ce que** la pièce en tôle (18) est amenée à se déformer dans ce renfoncement (80) au moyen de la matrice (22) pour réaliser la moulure (76), et
**en ce que** le poinçonnage de l'élément fonctionnel (10) dans la pièce en tôle a lieu dans la même course d'un système d'enfoncement dans lequel la moulure (76) est réalisée.

2. Procédé selon la revendication 1,
**caractérisé en ce que** l'élément fonctionnel (10) est un élément rectangulaire ou carré en vue de dessus, avec un tronçon à poinçonner (3) également rectangulaire ou carré, qui dépasse en éloignement de la partie de tête (1) depuis le côté de la surface d'appui sur tôle (2) de la partie de tête (1) et comporte sur ses deux côtés mutuellement opposés des contre-dépouilles (4) dans lesquelles le matériau de la tôle est enfoncé par des ergots correspondants (48, 50) de la matrice (22), afin d'empêcher de chasser par pression hors de la pièce en tôle (18) l'élément fonctionnel (10) poinçonné dans la pièce en tôle (18).

3. Procédé selon la revendication 1 ou 2,
**caractérisé en ce que** la tête de pose (14), qui est utilisée pour poinçonner l'élément fonctionnel (10) et pour réaliser la moulure (76), comprend une pièce formant ergot (14'), qui est raccordée via un ressort à une pièce du système d'enfoncement qui transmet une force de pression, ainsi qu'un poussoir (16) qui est monté directement sur la pièce précitée, et la force du ressort est conçue de manière à suffire pour réaliser la moulure (76) et pour permettre à la pièce formant ergot (14') de s'effacer par rapport au poussoir (16) uniquement après la réalisation de la moulure (76) en raison de l'augmentation de la force lors de la poursuite de la course du système d'enfoncement, cet effacement étant nécessaire pour poinçonner l'élément fonctionnel (10) au moyen du poussoir et de la matrice dans la pièce en tôle dans la région de la moulure terminée (76), dans la poursuite de la course du système d'enfoncement.
